# FASCICULE DE BREVET EUROPEEN

(11) **EP 0 972 694 B1**
(45) Date de publication et mention de la délivrance du brevet: **25.08.2004**
(21) Numéro de dépôt: 99401681.4
(22) Date de dépôt: 05.07.1999
(51) Int. Cl.: B62D 1/18

(54) **Dispositif de serrage à commande électrique pour un système de réglage en position d'un élément par rapport à un autre élément**
Elektrisch betriebene Klemmvorrichtrung zum Verstellen der Position eines Teiles bezüglich eines anderen Teiles
Electrically operated clamping device for adjusting the position of an element with respect to another

(30) Priorité: 13.07.1998 FR 9809023
(43) Date de publication de la demande: 19.01.2000
(73) Titulaire: LEMFÖRDER NACAM SA, 41100 Vendôme (FR)
(72) Inventeur: Ben Rhouma, M.Abdel Karim, 41100 Vendome (FR); Robin, Thomas, 41100 Aze (FR)
(74) Mandataire: Ramey, Daniel

(56) Documents cités:
- DE-A- 3 409 987
- DE-A- 4 016 163
- FR-A- 2 687 628
- FR-A- 2 690 403
- US-A- 4 541 298

## Description

La présente invention se rapporte à un dispositif de serrage à commande électrique pour un système de réglage en position d'un premier élément par rapport à un deuxième élément considéré comme fixe. Le dispositif de serrage a un axe de serrage, qui est sensiblement perpendiculaire à l'axe du premier élément. Ce dispositif de serrage d'un système de réglage en position est notamment applicable à une colonne de direction de véhicule automobile, cette colonne de direction étant réglable en hauteur et/ou en profondeur dans le plan vertical.

Il existe des colonnes de direction réglables en hauteur ou en profondeur, ou en hauteur et en profondeur, qui possèdent un système de réglage en position de la colonne de direction par rapport à un élément support relié au châssis du véhicule automobile. Ce système de réglage en position est muni d'un dispositif de serrage qui permet d'avoir deux positions : une position débloquée ou déverrouillée pour permettre le réglage de la colonne de direction à la position voulue, et une position bloquée ou verrouillée, une fois cette position choisie.

Dans les systèmes connus, le dispositif de serrage du système de réglage de la colonne de direction du véhicule automobile a un axe de tige de serrage, qui est disposé en dessous du premier élément ou tube-corps de la colonne de direction. Ce dispositif de serrage a une poignée de manoeuvre et un système de blocage par exemple à cames, qui sont disposées à une des extrémités de la tige de serrage. Cette tige de serrage traverse les deux montants du deuxième élément considéré comme fixe.

Ce type de montage présente un encombrement gênant pour le conducteur et surtout dangereux en cas d'accident, car il nécessite une tige de serrage disposée très basse en dessous de la colonne de direction, avec une poignée de manoeuvre qui peut heurter le corps du conducteur en cas de choc.

Le document FR-A-2687628 décrit un dispositif de serrage à commande électrique selon les caractéristiques de la revendication 1, avec un carter disposé sur l'un des montants fixes, et comprenant un moteur électrique et un réducteur entraînant directement en rotation une tige de serrage, dont l'extrémité filetée tourne dans un écrou fixé en rotation à l'extérieur de l'autre montant fixe. Ce dispositif présente plusieurs inconvénients : un ensemble moteur-tige de serrage sur un montant sans souplesse d'agencement, un système vis-écrou sur l'autre montant et une tige de serrage mobile en rotation.

Le but de la présente invention est de proposer un dispositif de serrage qui évite les inconvénients décrits ci-dessus ; et, dont l'ensemble de manoeuvre peut être disposée en dehors de l'environnement de la colonne de direction, afin de pouvoir dégager la zone située en dessous de ladite colonne de direction.

L'invention se rapporte à un dispositif de serrage d'un système de réglage en position d'un élément par rapport à un élément support considéré comme fixe.
Dans un mode de réalisation de l'invention, l'élément support est constitué d'une embase ayant à chacune de ses deux extrémités un montant. Le premier élément est disposé à l'intérieur des deux montants de l'élément support, lesdits montants étant sensiblement parallèles à l'axe du premier élément.
Ledit système de réglage en position est verrouillé à la position choisie par ledit dispositif de serrage, dont les différents éléments sont montés sur une tige de serrage traversant les deux montants, et dont l'axe est l'axe de serrage, qui est sensiblement perpendiculaire à l'axe du premier élément.
Ledit dispositif de serrage est mis en position verrouillée ou déverrouillée par une commande électrique à distance d'un convertisseur électromécanique d'énergie, qui entraîne le dispositif de serrage en rotation, avec un système d'information sur l'état de verrouillage ou de déverrouillage ; et est caractérisé en ce que :
- le convertisseur électromécanique d'énergie fournit le mouvement rotatif voulu à un ensemble de réduction de vitesse, comprenant au moins un réducteur de serrage ;
- ledit réducteur de serrage entraîne le dispositif de serrage en rotation ;
- le dispositif de serrage comporte un ensemble de blocage disposé à l'extérieur de l'un des montants par rapport à l'axe, entre une face externe du montant et un élément d'appui relié et sensiblement perpendiculaire à la tige de serrage ;
- ledit dispositif de serrage comporte à l'extérieur de l'autre montant et contre une face externe dudit montant un élément d'appui relié et sensiblement perpendiculaire à la tige de serrage
- le réducteur de serrage est disposé dans un carter monté contre la face externe du montant et entre ledit montant et l'ensemble de blocage ;
- le réducteur de serrage entraîne en rotation ledit ensemble de blocage ;
- la tige de serrage est fixe en rotation ;
- le réducteur de serrage est libre en rotation par rapport à ladite tige de serrage.
Selon les caractéristiques des revendications dépendantes l'ensemble de blocage est un ensemble de blocage à cames qui comporte :
- une came fixe circulaire solidaire en rotation du montant de l'élément support ;
- une came mobile circulaire libre en rotation sur la tige de serrage ;
- lesdites cames ayant comme axe l'axe de serrage, et étant traversées librement par la tige de serrage.
L'ensemble de blocage à cames a :
- la came fixe, qui comporte des dents constituées chacune d'un sommet et d'un creux, avec deux flancs, chacun des flancs ayant une pente déterminée de manière à assurer la mise en contrainte progressive du dispositif de serrage ;
- la came mobile qui comporte le même nombre de dents que la came fixe, chacune des dents de ladite came mobile est constituée d'un sommet et d'un creux avec deux flancs, chacun des deux flancs est aménagé pour coopérer avec le flanc correspondant de la came fixe de façon à assurer la position déverrouillée, et pour coopérer avec le flanc correspondant de la came fixe de façon à assurer la mise en contrainte progressive du dispositif de serrage ;
- la largeur du sommet de la dent de la came mobile coopérant avec la largeur du creux correspondant de la came fixe pour permettre la mise en position déverrouillée ;
- les sommets correspondants coopérant pour le maintien de la position verrouillée.

Avantageusement, le dispositif de serrage est constitué
- par la tige de serrage qui est immobilisée en rotation autour de l'axe de serrage par l'élément d'appui ;
- ladite tige de serrage possède à son autre extrémité une partie filetée, qui coopère avec un écrou disposé à l'extérieur de l'autre montant ; et qui constitue l'ensemble de blocage.

L'ensemble de réduction de vitesse comporte un seul réducteur de vitesse appelé réducteur de serrage, qui entraîne le dispositif de serrage en rotation, ledit réducteur de serrage est monté libre en rotation sur la tige de serrage.

En variante, l'ensemble de réduction de vitesse comporte deux réducteurs de vitesse :
- un réducteur de vitesse appelé réducteur de serrage, qui entraîne le dispositif de serrage en rotation, ledit réducteur de serrage est monté libre en rotation sur la tige de serrage ;
- un réducteur de vitesse appelé réducteur du convertisseur, qui est entraîné directement par le convertisseur électromécanique d'énergie.

Selon les réalisations :
- le réducteur de serrage et le convertisseur électromécanique d'énergie forment un seul ensemble, qui est monté de manière que le réducteur de serrage soit libre en rotation sur la tige de serrage.
- le réducteur de serrage et le convertisseur électromécanique d'énergie sont reliés en rotation par un système mécanique de transmission de mouvement, de manière que le convertisseur électromécanique d'énergie puisse être placé à l'endroit voulu, et que le réducteur de serrage soit libre en rotation sur la tige de serrage.

Le système mécanique de transmission de mouvement est un câble flexible disposé dans une gaine, qui est supportée à l'une de ses extrémités par le convertisseur électromécanique d'énergie, et qui est supportée à l'autre extrémité par le carter du réducteur de serrage.

Selon une variante, le réducteur de serrage, le réducteur du convertisseur, et le convertisseur électromécanique d'énergie forment un seul ensemble, qui est monté de manière que le réducteur de serrage soit libre en rotation sur la tige de serrage.

Dans une autre variante, le réducteur de serrage d'une part, et le réducteur du convertisseur avec le convertisseur électromécanique d'énergie d'autre part, sont reliés en rotation par un système mécanique de transmission de mouvement de manière que le convertisseur électromécanique d'énergie, avec le réducteur du convertisseur, puissent être placés à l'endroit voulu, et que le réducteur de serrage soit libre en rotation sur la tige de serrage.

Le convertisseur électromécanique d'énergie est un moteur électrique ou en variante un système électromagnétique.

Dans un premier cas, la commande à distance du convertisseur électromécanique d'énergie s'effectue par un interrupteur électrique à deux positions : repos, et active qui déclenche le verrouillage dudit dispositif de serrage en cas de position déverrouillée, ou qui déclenche le déverrouillage en cas de position verrouillée.

Dans un autre cas, la commande à distance du convertisseur électromécanique d'énergie s'effectue par un bouton poussoir où la position non enfoncée représente la positon repos, et où chaque enfoncement déclenche le verrouillage dudit dispositif de serrage en cas de position déverrouillée, ou déclenche le déverrouillage en cas de position verrouillée.

Dans un autre cas, la commande à distance du convertisseur électromécanique d'énergie s'effectue par la clé de contact du véhicule automobile.

Avantageusement, le système d'information sur l'état de verrouillage ou de déverrouillage dudit dispositif de serrage consiste en un système visuel par signal lumineux.

En variante, le système d'informations sur l'état de verrouillage ou de déverrouillage dudit dispositif de serrage consiste en un système visuel par message écrit sur un écran.

Dans un mode de réalisation, le réducteur de serrage est un réducteur mécanique à roue et vis sans fin monté dans un carter monobloc comprenant :
- un boîtier dans lequel est logée la roue qui tourne librement sur un tourillon de ce boîtier muni d'un trou de passage de la tige de serrage ; et
- un boîtier dans lequel est logée la vis, qui tourne librement dans ce boîtier ;

L'ensemble de blocage à cames a :
- la came mobile qui est entraînée en rotation par la roue au moyen d'un tenon diamétral agencé sur la face interne de la came mobile, ledit tenon diamétral s'engageant dans une rainure diamétrale agencée sur la face externe de la roue ; ladite came mobile ayant un trou de passage de la tige de serrage;
- la came fixe qui est liée en rotation avec une embase au moyen de plots, agencés à la périphérie de la face externe et ladite came fixe, lesdits plots s'engageant dans des encoches aménagées sur la face interne de ladite embase, ladite came fixe ayant un trou de passage de la tige de serrage,
- l'embase est munie à sa périphérie d'une tige axiale de liaison ayant la longueur voulue pour s'engager entre deux ailettes aménagées sur la face extérieure du boîtier de la roue du réducteur de serrage, de manière à relier l'embase avec le boîtier qui est fixe en rotation et lié en rotation avec l'élément support, ladite embase ayant un trou de passage de la tige de serrage.

Dans ce cas, un élément d'appui est constitué par une collerette agencée à l'extrémité de la tige de serrage, ladite collerette s'appliquant contre la face externe de l'embase, et l'autre élément d'appui est constitué par une rondelle tenue et réglée par un écrou vissé sur l'extrémité filetée de la tige de serrage, ledit élément d'appui comportant une languette de guidage dans une fente du montant, et le boîtier de la roue du réducteur de serrage étant muni, sur sa face interne, d'une languette de guidage dans une fente du montant.

Dans un type d'architecture de ce dernier cas, le système mécanique de transmission de mouvement est un câble flexible disposé dans une gaine qui est supportée à l'une de ses extrémités par le réducteur du convertisseur, et qui est supporté à l'autre extrémité par le carter du réducteur de serrage.

Dans un autre type d'architecture de ce dernier cas, le réducteur de serrage, le réducteur du convertisseur et le convertisseur électromécanique d'énergie forment une seule unité, un embout du réducteur du convertisseur se montant directement dans un logement du carter du réducteur de serrage.

Selon l'invention, une réalisation du réducteur de serrage et de l'ensemble de blocage est atteinte comme décrit ci-après dans ce mode de réalisation, le dispositif de serrage comporte une tige de serrage avec un écrou, qui est mis en position verrouillée ou déverrouillée par un ensemble de commande électrique à distance.

La tige de serrage possède à l'extérieur de l'un des montants et contre une face externe dudit montant un élément d'appui relié et sensiblement perpendiculaire à la tige de serrage. Ladite tige de serrage est immobilisée en rotation autour de l'axe de serrage par l'élément d'appui. La tige de serrage possède à son autre extrémité une partie filetée, qui coopère avec l'écrou, qui est disposé à l'extérieur de l'autre montant. L'écrou est mis en position verrouillée ou déverrouillée par l'ensemble de commande électrique à distance.

Le réducteur de serrage est un réducteur mécanique à roue et vis sans fin monté dans un carter monobloc comprenant :
- un boîtier dans lequel est logée la roue qui tourne librement sur un tourillon de ce boîtier muni d'un trou de passage de la tige de serrage ; et
- un boîtier dans lequel est logée la vis, qui tourne librement dans ce boîtier.

L'écrou est entraîné en rotation par la roue au moyen d'un tenon diamétral agencé sur la face interne d'appui de l'écrou, ledit tenon diamétral s'engageant dans une rainure diamétrale agencée sur la face externe de la roue.

L'élément d'appui est constitué par l'écrou monté et vissé sur l'extrémité filetée de la tige de serrage, ledit écrou s'appliquant contre la face externe de la roue. L'élément d'appui est constitué par une collerette agencée à l'extrémité de la tige de serrage, ladite collerette s'appliquant contre la face externe du montant. L'élément d'appui comporte une languette de guidage dans une fente du montant, et le boîtier de la roue du réducteur de serrage étant muni sur sa face interne, d'une languette de guidage dans une fente du montant.

Une application particulièrement intéressante de l'invention se rapporte à une colonne de direction de véhicule automobile dans laquelle le premier élément est le tube-corps avec son carré-renfort, et l'élément support est monté sur la carrosserie du véhicule.

Le dispositif de serrage à commande électrique d'une colonne de direction de véhicule automobile selon l'invention présente ainsi l'avantage d'avoir un ensemble de manoeuvre situé en dehors de l'environnement immédiat de la colonne de direction, ce qui dégage la zone située en dessous de la colonne de direction. De plus ce dispositif de serrage à commande délocalisée peut s'adapter facilement sur les colonnes de direction existantes.

D'autres caractéristiques et avantages de la présente invention ressortiront de la description qui va suivre, donnée à titre d'exemples nullement limitatifs, en référence aux dessins annexés sur lesquels :
- la figure 1 est une vue en perspective de l'ensemble du dispositif de serrage à commande électrique selon l'invention ;
- la figure 2 est une vue éclatée en perspective correspondante à la figure 1 ;
- la figure 3 est une vue en perspective d'un autre mode de réalisation de l'invention ;
- la figure 4 est une coupe du détail des cames de la figure 2 ;
- la figure 5 est une vue d'ensemble d'une colonne de direction munie du dispositif de serrage représenté sur la figure 3 ;
- la figure 6 est une vue d'ensemble d'une colonne de direction munie du dispositif de serrage représenté sur la figure 1 ;
- la figure 7 est une vue éclatée en perspective analogue à la figure 2 d'un autre mode de réalisation de l'invention.

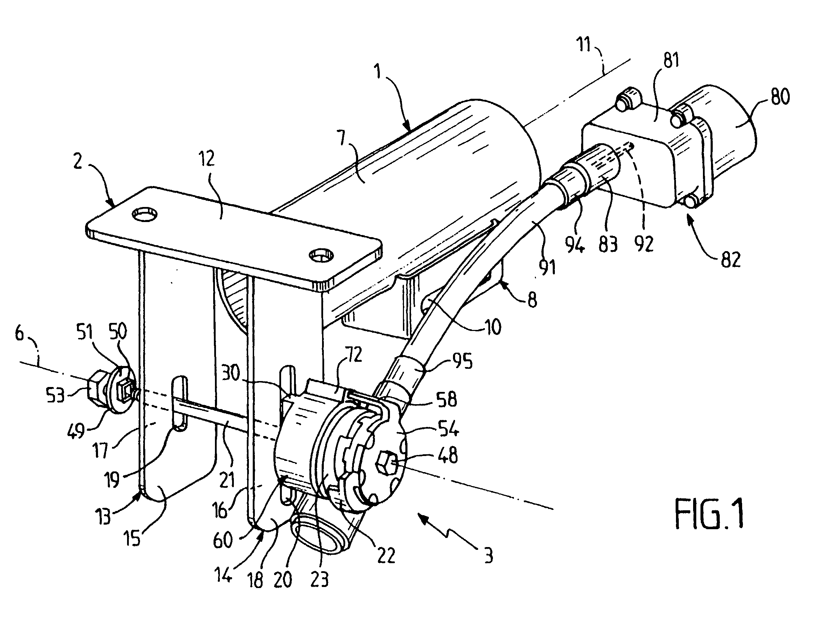

Le dispositif de serrage selon l'invention se rapporte à un système de réglage en position d'un élément 1 par rapport à un élément support 2 comme cela est représenté sur la figure 1. L'élément 1 est un tube-corps 7 de colonne de direction de véhicule automobile dans lequel est monté tournant l'axe de direction. L'élément support 2 est raccordé au châssis du véhicule automobile, et il est considéré comme fixe. L'élément support 2 est constitué d'une embase 12, qui est munie à chacune de ses deux extrémités d'un montant référencé 13 et 14. L'élément 1, qui a un axe 11, est disposé à l'intérieur des deux montants 13 et 14 de l'élément support 2. Les montants 13 et 14 sont sensiblement parallèles à l'axe 11 de l'élément 1. Dans la suite de la description et pour un même élément, on appellera interne par rapport à l'axe 11 de l'élément 1, ce qui est le plus près de cet axe 11, et externe ce qui est le plus éloigné. Ainsi le montant 13 de l'élément support 2 a une face interne 15 et une face externe 17 par rapport à l'axe 11. De même le montant 14 a une face interne 16, et une face externe 18 par rapport à ce même axe 11. De plus, le montant 13 possède une fente 19 qui est orientée dans le sens du réglage du système de réglage en position. Le montant 14 possède également une fente 20 qui est orientée de la même façon dans le sens du réglage.

Le système de réglage en position est verrouillée à la position choisie par le dispositif de serrage 3 dont l'axe 6 est sensiblement perpendiculaire à l'axe 11 de l'élément 1.

Les différents éléments constituant le dispositif de serrage 3 sont montés sur une tige de serrage 21, qui a comme axe l'axe 6. La tige de serrage 21 traverse la fente 19 du montant 13 et la fente 20 du montant 14 de l'élément support 2, ainsi que la fente 9 et la fente 10 du carré renfort 8 appartenant au tube corps 7.

Le dispositif de serrage 3 selon l'invention comporte essentiellement un ensemble de blocage à cames 5, qui est mis en position verrouillée ou déverrouillée par un ensemble de commande à distance.

Dans les différents modes de réalisation représentés sur les figures 1, 2, 3, 5 et 6, l'ensemble de blocage à cames 5 est disposé à l'extérieur du montant 14 par rapport à l'axe 11 de l'élément 1. Cet ensemble de blocage à came 5 comporte :
- une came fixe circulaire 22 liée en rotation au montant 14 de l'élément support 2 ; et
- une came mobile circulaire 23 libre en rotation sur la tige de serrage 21.

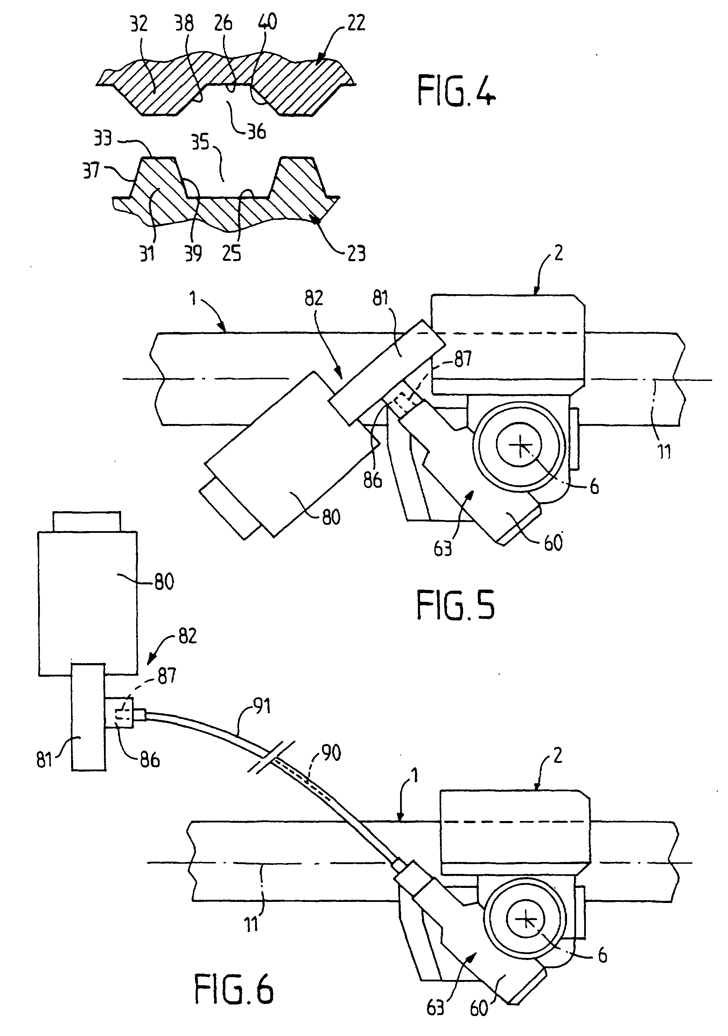

Comme on peut en voir le détail sur la figure 4, la came fixe 22 comporte des dents 32, qui sont constituées chacune d'un sommet 34 et d'un creux 36, avec deux flancs 38 et 40. Chacun des flancs 38 et 40 a une pente qui est déterminée de manière à assurer la mise en contrainte progressive du dispositif de serrage 3.

La came mobile 23 comporte le même nombre de dents 31 que la came fixe 22 a de dents 32. Chacune des dents 31 de ladite came mobile 23 est constituée d'un sommet 33 et d'un creux 35, avec deux flancs 37 et 39. Chacun des flancs 37 et 39 est aménagé pour coopérer avec le flanc 38 et 40 correspondant de la came fixe 22, de façon à assurer la position déverrouillée et pour coopérer avec le flanc correspondant 38, 40 de la came fixe 22, de façon à assurer la mise en contrainte progressive du dispositif de serrage 3.

La largeur du sommet 33 de la dent 31 de la came mobile 23 coopère avec la largeur du creux 36 correspondant de la came fixe 22, pour permettre la mise en position déverrouillée. Les sommets correspondants 33 et 34 coopèrent pour assurer la position verrouillée.

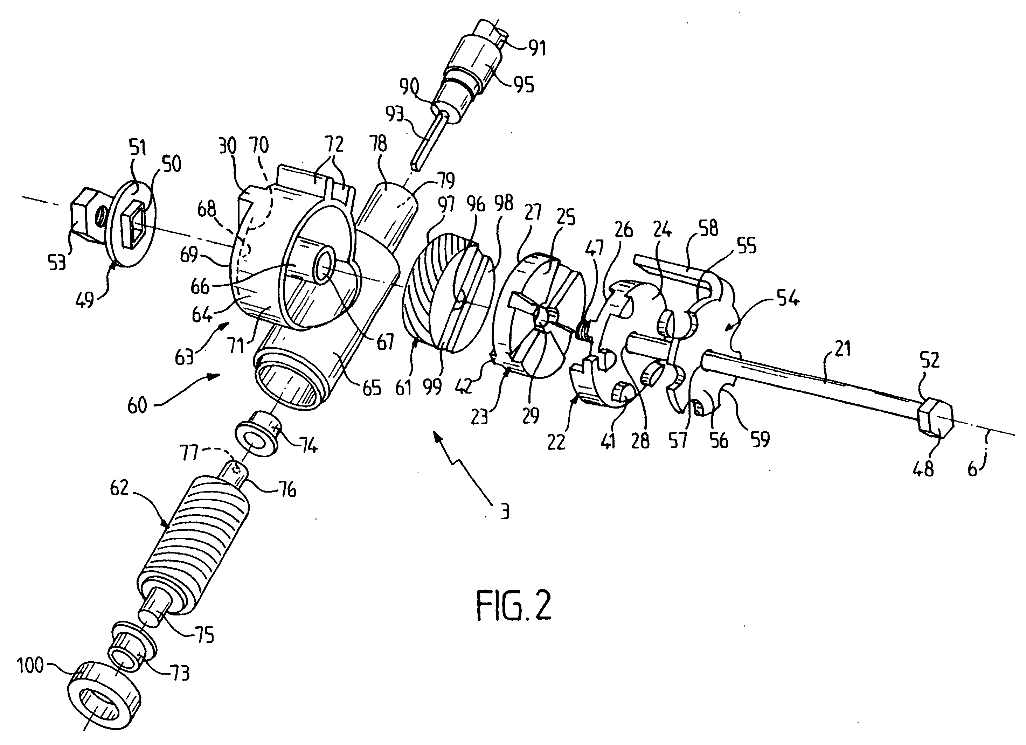

Dans le mode de réalisation représenté sur les figures 1 et 2, le dispositif de serrage 3 comporte un ensemble de blocage à cames 5, qui est mis en position verrouillée ou déverrouillée par un ensemble de commande électrique à distance.

L'ensemble de blocage à cames 5 est disposé à l'extérieur du montant 14 de l'élément support 2, entre une face externe 18 de ce montant 14, et un élément d'appui 48 qui est relié et qui est sensiblement perpendiculaire à la tige de serrage 21.

Le dispositif de serrage 3 comporte, à l'extérieur de l'autre montant 13, et contre une face externe 17 dudit montant 13, un autre élément d'appui 49, qui est relié et qui est sensiblement perpendiculaire à la tige de serrage 21.

Dans ce type de montage, l'élément d'appui 48 consiste en une collerette qui est agencée à l'extrémité de la tige de serrage 21. L'élément d'appui 49 consiste en une rondelle qui est tenue et réglée par un écrou 53. Cet écrou 53 est vissé sur l'autre extrémité filetée 47 de la tige de serrage 21. De plus l'élément d'appui 49 comporte une languette 50 de guidage dans la fente 19 du montant 13. L'élément d'appui 49 s'applique contre la face externe 17 du montant 13 au moyen de sa face d'appui 51. La came fixe 22 a une face interne 26 sur laquelle sont agencées les dents 32. La came mobile 23 a une face externe 25 sur laquelle sont agencées les dents 31.

La came fixe 22 a un trou de passage 28 de la tige de serrage 21, et la came mobile 23 a un trou de passage 29 de cette tige de serrage 21.

L'ensemble de commande électrique à distance comporte :
- un ensemble de réduction, qui entraîne la came mobile 23 en rotation ;
- un convertisseur électromécanique d'énergie 80, qui transforme l'énergie électrique en énergie mécanique, et qui fournit le mouvement rotatif voulu à l'ensemble de réduction ; et
- une commande à distance du convertisseur électromécanique d'énergie 80.

La commande à distance du convertisseur électromécanique d'énergie 80 s'effectue par un interrupteur électrique. Cet interrupteur électrique a deux positions :
- une position repos, et
- une position active, qui déclenche le verrouillage du dispositif de serrage 3 en cas de position déverrouillée, ou qui déclenche le déverrouillage dudit dispositif de serrage 3 en cas de position verrouillée.

Dans une autre réalisation de l'invention, la commande à distance du convertisseur électromécanique d'énergie 80 s'effectue par un bouton poussoir. Le bouton poussoir a une position non enfoncée, qui représente la position repos. Chaque enfoncement du bouton poussoir déclenche le changement d'état du dispositif de serrage 3, c'est-à-dire :
- qu'en position déverrouillée, l'enfoncement du bouton poussoir déclenche le verrouillage du dispositif de serrage 3, et
- qu'en position verrouillée, l'enfoncement du bouton poussoir déclenche le déverrouillage du dispositif de serrage 3.

Dans encore une autre réalisation de l'invention, la commande à distance du convertisseur électromécanique d'énergie 80 s'effectue par la clé de contact du véhicule automobile.

De plus, le dispositif 3 à commande électrique de l'invention est équipé d'un système d'information qui renseigne le conducteur sur l'état du dispositif de serrage 3 ; c'est-à-dire qu'il indique la position verrouillée ou la position déverrouillée dudit dispositif de serrage 3. Ce système d'information est déclenché par la commande à distance électrique du convertisseur électromécanique d'énergie 80.

Le système d'information sur la position verrouillée ou sur la position déverrouillée du dispositif de serrage 3 consiste en un système visuel, qui est réalisé par un signal lumineux comme par exemple une lampe témoin.

Dans une autre réalisation de l'invention, le système d'information sur la position verrouillée ou sur la position déverrouillée du dispositif de serrage 3 consiste en un système visuel, qui est réalisé par un message écrit sur un écran.

Le convertisseur électromécanique d'énergie 80, dans les modes de réalisation représentés sur les figures 1, 3, 5 et 6, est un moteur électrique.

Dans d'autres réalisations de l'invention, le convertisseur électromécanique d'énergie 80 est un système électromagnétique.

Comme cela sera défini ci-après, dans la description des différentes figures 1, 2, 5 et 6, l'ensemble de réduction de vitesse selon l'invention peut avoir différentes architectures.

Dans un premier type de réalisation de l'invention, l'ensemble de réduction de vitesse comporte un seul réducteur de vitesse, qui est appelé réducteur de serrage 60. Ce réducteur de serrage 60 entraîne la came mobile 23 en rotation, et ce réducteur de serrage 60 est monté libre en rotation sur la tige de serrage 21.

Dans un cas de réalisation, le réducteur de serrage 60 et le convertisseur électromécanique d'énergie 80 forment un seul ensemble. Cet ensemble est monté de manière que le réducteur de serrage 60 soit libre en rotation sur la tige de serrage 21.

Dans une autre réalisation, le réducteur de serrage 60 et le convertisseur électromécanique d'énergie 80 sont reliés en rotation par un système mécanique de transmission de mouvement. Ce système mécanique de transmission de mouvement permet de disposer le convertisseur électromécanique d'énergie 80 à l'endroit voulu. De plus, le réducteur de serrage est libre en rotation sur la tige de serrage 21. Dans ce cas de réalisation, le système mécanique de transmission de mouvement est un câble flexible 90, qui est disposé dans une gaine 91. Cette gaine 91 est supportée à l'une de ses extrémités par le convertisseur électromécanique d'énergie 80 et elle est supportée à l'autre extrémité par un carter 63 du réducteur de serrage 60.

Dans un deuxième type de réalisation de l'ensemble de réduction de vitesse, cet ensemble de réduction de vitesse comporte deux réducteurs de vitesse :
- un réducteur de vitesse, qui est appelé réducteur de serrage et qui entraîne la came mobile 23 en rotation, ledit réducteur de serrage 60 est monté libre en rotation sur la tige de serrage 21 ;
- un réducteur de vitesse appelé réducteur du convertisseur 81, qui est entraîné directement par le convertisseur électromécanique d'énergie 80.

Dans ce type de réalisation, le réducteur de serrage 60, le réducteur du convertisseur 81, et le convertisseur électromécanique 80 forment un seul et même ensemble. Cet ensemble est monté de manière que le réducteur de serrage 60 soit libre en rotation sur la tige de serrage 21.

Dans d'autres cas de réalisation, le réducteur de serrage 60, et le réducteur du convertisseur 81 avec le convertisseur électromécanique d'énergie 80 d'autre part sont reliés en rotation par un système mécanique de transmission de mouvement. Ce système mécanique de transmission de mouvement est conçu de manière que le convertisseur électromécanique d'énergie 80 avec le réducteur du convertisseur 81 puissent être placés à l'endroit voulu. De plus, le réducteur de serrage 60 est libre en rotation sur la tige de serrage 21.

Le dispositif de serrage 3 selon l'invention représenté sur les figures 1 et 2 comporte un ensemble de réduction de vitesse, qui est composé d'un réducteur de serrage 60, et d'un réducteur du convertisseur 81. Le réducteur du convertisseur 81 est entraîné directement par le convertisseur électromécanique d'énergie 80, et l'ensemble de ces deux éléments forme un motoréducteur 82.

Le réducteur de serrage 60 d'une part, et le réducteur du convertisseur 81 avec le convertisseur électromécanique d'énergie 80 d'autre part, c'est-à-dire le motoréducteur 82 sont reliés en rotation par un système mécanique de transmission de mouvement. Ce système mécanique de transmission de mouvement est un câble flexible 90, qui est disposé dans une gaine 91. Cette gaine 91 est supportée à l'une de ses extrémités par le motoréducteur 82, et elle est supportée à l'autre extrémité par un carter 63 du réducteur de serrage 60.

Le réducteur de serrage 60 est un réducteur mécanique à roue et vis sans fin, qui est monté dans un carter monobloc 63. Ce carter monobloc 63 est constituée d'un boîtier 64, et d'un boîtier 65.

Le boîtier 64 reçoit la roue 61 du réducteur, qui tourne librement sur un tourillon 66 de ce boîtier 64. De plus, le tourillon 66 est muni d'un trou de passage 67 de la tige de serrage 21, qui traverse librement le boîtier 64. Le boîtier 64 possède un fond 68, qui a une face interne 69 et qui a une face externe 70. La face externe 70 reçoit la roue 61 qui vient s'appliquer contre elle, tandis que la face interne 69 vient s'appliquer contre la face externe 18 du montant 14 de l'élément support 2. De plus, la face interne 69 est munie d'une languette 30 de guidage dans la fente 20 du montant 14, et la face extérieure 71 du boîtier 64 est équipée de deux ailettes 72.

Le boîtier 65 reçoit la vis 62, qui tourne librement dans ce boîtier 65. Ce boîtier 65 est terminé d'un côté par un embout circulaire 78 dont l'axe est l'axe de la vis 62, avec un logement 79. La vis 62 comporte deux tourillons 75 et 76, qui viennent se monter dans deux coussinets correspondants 73 et 74, qui sont disposés dans le boîtier 65 de la vis 62. L'ensemble de la vis avec ses coussinets 73 et 74 est fermé par un anneau de fermeture 100.

La roue 61 qui vient se monter dans le boîtier 64, comporte un trou de passage 96 de la tige de serrage 21, de manière que la roue 61 tourne librement sur la tige de serrage 21. La roue 61 comporte une face interne 97, qui s'applique contre la face externe 70 du fond 68, et une face externe 98, sur laquelle est aménagée une rainure diamétrale 99.

L'ensemble de blocage à came 5 a la came mobile 23, qui est entraînée en rotation par la roue 61 au moyen d'un tenon diamétral 42, qui est agencé sur la face interne 27 de la came mobile 23. Ce tenon diamétral 42 est dimensionné de manière à s'engager dans la rainure diamétrale 99, qui est agencée sur la face externe 98 de la roue 61. De plus, la came mobile 23 a un trou de passage 29 de la tige de serrage 21, de manière que cette came mobile 23 puisse tourner librement sur la tige de serrage 21.

La came fixe 22 est liée en rotation avec une embase 54. Cette liaison s'effectue au moyen de plots 41, qui sont agencés à la périphérie de la face externe 24 de la came fixe 22. Les plots 41 s'engageant dans des encoches 59, qui sont aménagées sur la face interne 55 de cette embase 54. De plus, la came fixe 22 a un trou de passage 28 de la tige de serrage 21, de manière que la tige de serrage 21 puisse passer librement dans ladite came fixe 22.

L'embase 54 est munie à sa périphérie d'une tige axiale de liaison 58, qui a la longueur voulue pour s'engager entre les deux ailettes 72, qui sont aménagées sur la face extérieure 71 du boîtier 64 de la roue 61 du réducteur de serrage 60. Ainsi l'embase 54 est reliée avec le boîtier 64. Le boîtier 64 est lui-même fixe en rotation, c'est-à-dire qu'il est lié en rotation avec l'élément support 2 au moyen de la languette 30, qui vient s'engager et coulisser dans la fente 20 du montant 14 de l'élément support 2. L'embase 54 a un trou de passage 57 qui permet à la tige de serrage 21 de traverser librement cette embase 54.

Dans cette réalisation, l'élément d'appui 48 est constitué par une collerette qui est agencée à l'extrémité de la tige de serrage 21. Cette collerette s'applique contre la face externe 56 de l'embase 54 par sa face d'appui 52. Plus précisément dans la réalisation représentée sur la figure 2, cette collerette a la forme d'une tête hexagonale de vis. L'élément d'appui 49 est constitué par une rondelle, qui est tenue et réglée par un écrou 53. Cet écrou 53 est vissé sur l'extrémité filetée 47 de la tige de serrage 21. L'élément d'appui 49 comporte une languette 50 de guidage dans une fente 19 du montant 13. D'autre part le boîtier 64 de la roue 61 du réducteur de serrage 60 est muni sur sa face interne 69 de la languette 30 de guidage dans une fente 20 du montant 14.

Le système mécanique de transmission de mouvement est un câble flexible 90, qui est disposé dans une gaine 91. Cette gaine 91 est supportée à l'une de ses extrémités par le réducteur 81, c'est-à-dire par le motoréducteur 82, et il est supporté à l'autre extrémité par le carter 63 du réducteur de serrage 60. Plus précisément, la gaine 91 a un embout 94 qui vient s'engager dans un logement 84 d'un embout 83 du réducteur 81, et la gaine 91 a un embout 95, qui vient s'engager dans le logement 79 de l'embout 78 du boîtier de vis 65. Le câble 90 est terminé par une extrémité carrée 92 qui vient s'engager dans un trou carré 85 de la sortie de mouvement du réducteur 81, et le câble 90 a une autre extrémité carrée 93, qui vient s'engager dans un trou carré 77 aménagé dans les tourillons 76 de la vis 62.

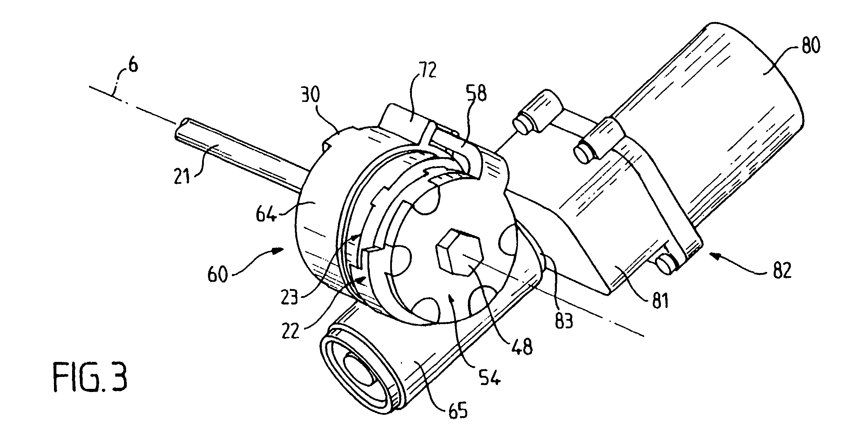

Dans le mode de réalisation représenté sur la figure 3, le réducteur de serrage 60, le réducteur du convertisseur 81 et le convertisseur électromécanique d'énergie 80, c'est-à-dire le motoréductuer 82 forment une seule et même unité. L'embout 83 du motoréducteur 82, c'est-à-dire du convertisseur 81, se monte directement dans le logement 79 de l'embout 78 du boîtier de vis 65.

Dans le cas du montage de la figure 5, le convertisseur électromécanique d'énergie 80 avec son réducteur de convertisseur 81, c'est-à-dire l'ensemble formant le motoréducteur 82 commande directement le réducteur de serrage 60. Dans ce cas, le carter du réducteur 81 possède un embout latéral 86, qui s'engage dans le logement 79 de l'embout 78 du carter du boîtier de vis 65.

Dans le cas de la figure 6, le groupe motoréducteur 82 comporte le convertisseur électromécanique d'énergie 80 avec le réducteur du convertisseur 81. Ce réducteur de convertisseur 81 a un embout latéral 86, avec un logement 87. Ce logement 87 reçoit l'extrémité de la gaine 91 qui supporte le câble 90. L'autre extrémité de la gaine 91 vient rentrer dans le logement 79 de l'embout 78 du boîtier de vis 65, appartenant au réducteur de serrage 60.

Dans les deux modes de réalisation représentés sur les figures 5 et 6, le motoréductuer 82 ne peut comporter seulement que le convertisseur électromécanique d'énergie 80 sans être équipé d'un réducteur 81.

Les modes de réalisation qui sont décrits précédemment s'appliquent à une colonne de direction de véhicule automobile dans laquelle l'élément 1 est un tube-corps 7 avec son carré-renfort 8, et l'élément support 2 est monté sur la carrosserie du véhicule automobile.

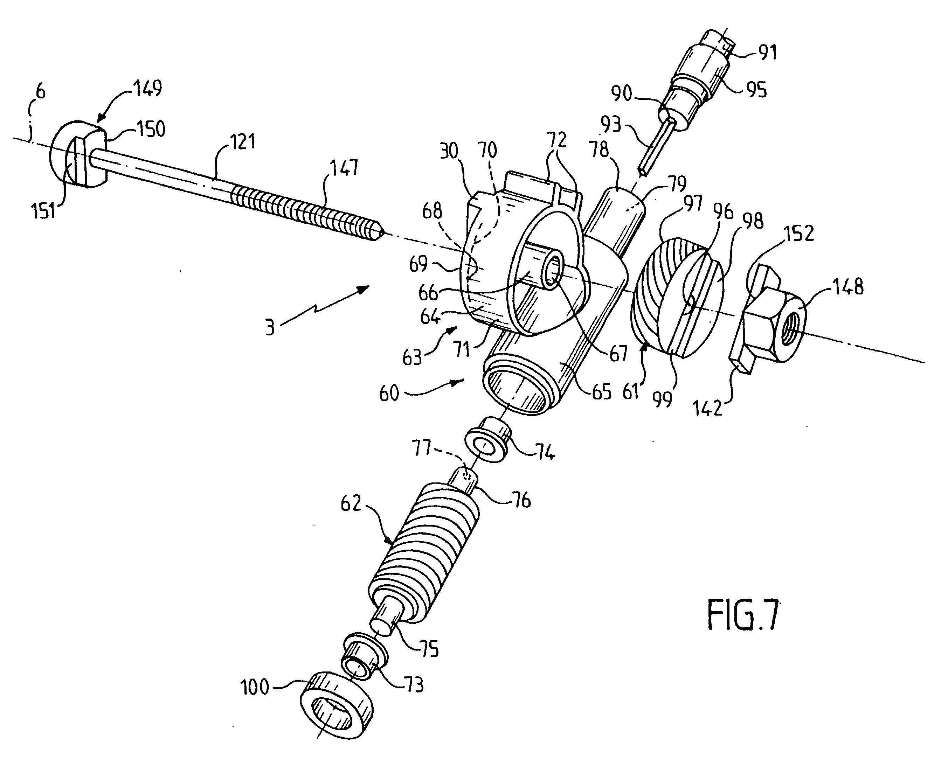

Dans le mode de réalisation représenté sur la figure 7, le dispositif de serrage 3 comporte une tige de serrage 121 avec un écrou 148, qui est mis en position verrouillée ou déverrouillée par un ensemble de commande électrique à distance.

La tige de serrage 121 possède à l'extérieur de l'un des montants 13 et contre une face externe 17 dudit montant 13 un élément d'appui 149 relié et sensiblement perpendiculaire à la tige de serrage 121. Ladite tige de serrage 121 est immobilisée en rotation autour de l'axe de serrage 6 par l'élément d'appui 149. La tige de serrage possède à son autre extrémité une partie filetée 147, qui coopère avec l'écrou 148, qui est disposé à l'extérieur de l'autre montant 14. L'écrou 148 est mis en position verrouillée ou déverrouillée par l'ensemble de commande électrique à distance.

Le réducteur de serrage 60 est un réducteur mécanique à roue et vis sans fin monté dans un carter monobloc 63 comprenant :
- un boîtier 64 dans lequel est logée la roue 61 qui tourne librement sur un tourillon 66 de ce boîtier 64 muni d'un trou de passage 67 de la tige de serrage 121 ; et
- un boîtier 65 dans lequel est logée la vis 62, qui tourne librement dans ce boîtier 65.

L'écrou 148 est entraîné en rotation par la roue 61 au moyen d'un tenon diamétral 142 agencé sur la face interne d'appui 152 de l'écrou 148, ledit tenon diamétral 142 s'engageant dans une rainure diamétrale 99 agencée sur la face externe 98 de la roue 61.

L'élément d'appui 148 est constitué par l'écrou monté et vissé sur l'extrémité filetée 147 de la tige de serrage 121, ledit écrou 148 s'appliquant contre la face externe 98 de la roue 61. L'élément d'appui 149 est constitué par une collerette agencée à l'extrémité de la tige de serrage 121, ladite collerette 149 s'appliquant contre la face externe 17 du montant 13. L'élément d'appui 149 comporte une languette 150 de guidage dans une fente 19 du montant 13, et le boîtier 64 de la roue 61 du réducteur de serrage 60 est muni sur sa face interne 69, d'une languette 30 de guidage dans une fente 20 du montant 14.

Ce mode de réalisation représenté sur la figure 7 peut, comme dans le cas de la réalisation représentée sur la figure 2, se combiner avec toutes les possibilités de réalisation de l'invention décrites précédemment.

Ainsi lorsque la roue 61 tourne, elle visse ou dévisse l'écrou 148 sur la tige de serrage 121, et par conséquent rapproche ou écarte les montants 13 et 14 de l'élément support 2, pour serrer ou desserrer le tube-corps 7 de la colonne de direction.

## Revendications

1. Dispositif de serrage (3) d'un système de réglage en position d'un élément (1) par rapport à un élément support (2) considéré comme fixe ;
- l'élément support (2) étant constitué d'une embase (12) ayant à chacune de ses deux extrémités un montant (13, 14), l'élément (1) étant disposé à l'intérieur des deux montants (13, 14) de l'élément support (2), lesdits montants (13, 14) étant sensiblement parallèles à l'axe (11) de l'élément (1),
- ledit système de réglage en position est verrouillé à la position choisie par ledit dispositif de serrage (3), dont les différents éléments sont montés sur une tige de serrage (21, 121) traversant les deux montants (13) et (14), et dont l'axe est l'axe de serrage (6), qui est sensiblement perpendiculaire à l'axe (11) de l'élément (1),
- ledit dispositif de serrage (3) est mis en position verrouillée ou déverrouillée par une commande électrique à distance d'un convertisseur électromécanique d'énergie (80), qui entraîne le dispositif de serrage (3) en rotation, avec un système d'information sur l'état de verrouillage ou de déverrouillage ; **caractérisé en ce que** :
- le convertisseur électromécanique d'énergie (80) fournit le mouvement rotatif voulu à un ensemble de réduction de vitesse (60, 81) ; comprenant au moins un réducteur de serrage (60) ;
- ledit réducteur de serrage (60) entraîne le dispositif de serrage (3) en rotation ;
- le dispositif de serrage (3) comporte un ensemble de blocage (5, 147-148) disposé à l'extérieur de l'un des montants (14) par rapport à l'axe (11), entre une face externe (18) du montant (14) et un élément d'appui (48, 148) relié et sensiblement perpendiculaire à la tige de serrage (21, 121),
- ledit dispositif de serrage (3) comporte à l'extérieur de l'autre montant (13) et contre une face externe (17) dudit montant (13) un élément d'appui (49, 149) relié et sensiblement perpendiculaire à la tige de serrage (21, 121);
- le réducteur de serrage (60) est disposé dans un carter (63) monté contre la face externe (18) du montant (14) et entre ledit montant (14) et l'ensemble de blocage (5, 147-148) ;
- le réducteur de serrage (60) entraîne en rotation ledit ensemble de blocage (5, 147-148) ;
- la tige de serrage (21, 121) est fixe en rotation,
- le réducteur de serrage (21, 121) est libre en rotation par rapport à ladite tige de serrage (21, 121).

2. Dispositif de serrage selon la revendication 1, **caractérisé en ce que** l'ensemble de blocage est un ensemble de blocage à cames (5) qui comporte :
- une came fixe (22) circulaire solidaire en rotation du montant (14) de l'élément support (2) ;
- une came mobile (23) circulaire libre en rotation sur la tige de serrage (21) ;
- lesdites cames ayant comme axe l'axe de serrage (6), et étant traversées librement par la tige de serrage (21).

3. Dispositif de serrage selon la revendication 2, **caractérisé en ce que** l'ensemble de blocage à came (5) a :
- la came fixe (22), qui comporte des dents (32) constituées chacune d'un sommet (34) et d'un creux (36), avec deux flancs (38, 40), chacun des flancs (38, 40) ayant une pente déterminée de manière à assurer la mise en contrainte progressive du dispositif de serrage (3) ;
- la came mobile (23) qui comporte le même nombre de dents (31) que la came fixe (22), chacune des dents (31) de ladite came mobile (23) est constituée d'un sommet (33) et d'un creux (35) avec deux flancs (37, 39), chacun des deux flancs (37, 39) est aménagé pour coopérer avec le flanc correspondant (38, 40) de la came fixe (22) de façon à assurer la position déverrouillée, et pour coopérer avec le flanc correspondant (38, 40) de la came fixe (22) de façon à assurer la mise en contrainte progressive du dispositif de serrage (3) ;
- la largeur du sommet (33) de la dent (31) de la came mobile (23) coopérant avec la largeur du creux (36) correspondant de la came fixe (22) pour permettre la mise en position déverrouillée ;
- les sommets correspondants 34 et 33 coopérant pour le maintien de la position verrouillée.

4. Dispositif de serrage selon la revendication 1, **caractérisé en ce que** le dispositif de serrage (3) est constitué
- par la tige de serrage (121) qui est immobilisée en rotation autour de l'axe de serrage (6) par l'élément d'appui (149) ;
- ladite tige de serrage (121) possède à son autre extrémité une partie filetée (147), qui coopère avec un écrou (148) disposé à l'extérieur de l'autre montant (14) ; et qui constitue l'ensemble de blocage.

5. Dispositif de serrage selon l'une quelconque des revendications précédentes, **caractérisé en ce que** l'ensemble de réduction de vitesse comporte un seul réducteur de vitesse appelé réducteur de serrage (60), qui entraîne le dispositif de serrage (3) en rotation, ledit réducteur de serrage (60) est monté libre en rotation sur la tige de serrage (21, 121).

6. Dispositif de serrage selon l'une quelconque des revendications 1 à 4, **caractérisé en ce que** l'ensemble de réduction de vitesse comporte deux réducteurs de vitesse :
- un réducteur de vitesse appelé réducteur de serrage (60), qui entraîne le dispositif de serrage (3) en rotation, ledit réducteur de serrage (60) est monté libre en rotation sur la tige de serrage (21, 121) ;
- un réducteur de vitesse appelé réducteur du convertisseur (81), qui est entraîné directement par le convertisseur électromécanique d'énergie (80).

7. Dispositif de serrage selon la revendication 5, **caractérisé en ce que** le réducteur de serrage (60) et le convertisseur électromécanique d'énergie (80) forment un seul ensemble, qui est monté de manière que le réducteur de serrage (60) soit libre en rotation sur la tige de serrage (21, 121).

8. Dispositif de serrage selon la revendication 5, **caractérisé en ce que** le réducteur de serrage (60) et le convertisseur électromécanique d'énergie (80) sont reliés en rotation par un système mécanique de transmission de mouvement, de manière que le convertisseur électromécanique d'énergie (80) puisse être placé à l'endroit voulu, et que le réducteur de serrage (60) soit libre en rotation sur la tige de serrage (21, 121).

9. Dispositif de serrage selon la revendication 8, **caractérisé en ce que** le système mécanique de transmission de mouvement est un câble flexible (90) disposé dans une gaine (91), qui est supportée à l'une de ses extrémités par le convertisseur électromécanique d'énergie (80), et qui est supportée à l'autre extrémité par le carter (63) du réducteur de serrage (60).

10. Dispositif de serrage selon la revendication 6, **caractérisé en ce que** le réducteur de serrage (60), le réducteur du convertisseur (81), et le convertisseur électromécanique d'énergie (80) forment un seul ensemble, qui est monté de manière que le réducteur de serrage (60) soit libre en rotation sur la tige de serrage (21, 121).

11. Dispositif de serrage selon la revendication 6, **caractérisé en ce que** le réducteur de serrage (60) d'une part, et le réducteur du convertisseur (81) avec le convertisseur électromécanique d'énergie (80) d'autre part, sont reliés en rotation par un système mécanique de transmission de mouvement de manière que le convertisseur électromécanique d'énergie (80), avec le réducteur du convertisseur (81), puissent être placés à l'endroit voulu, et que le réducteur de serrage (60) soit libre en rotation sur la tige de serrage (21, 121).

12. Dispositif de serrage selon l'une quelconque des revendications précédentes, **caractérisé en ce que** le convertisseur électromécanique d'énergie (80) est un moteur électrique.

13. Dispositif de serrage selon l'une quelconque des revendications 1 à 11, **caractérisé en ce que** le convertisseur électromécanique d'énergie (80) est un système électromagnétique.

14. Dispositif de serrage selon l'une quelconque des revendications précédentes, **caractérisé en ce que** la commande à distance du convertisseur électromécanique d'énergie (80) s'effectue par un interrupteur électrique à deux positions : repos, et active qui déclenche le verrouillage dudit dispositif de serrage (3) en cas de position déverrouillée, ou qui déclenche le déverrouillage en cas de position verrouillée.

15. Dispositif de serrage selon l'une quelconque des revendications 1 à 13, **caractérisé en ce que** la commande à distance du convertisseur électromécanique d'énergie (80) s'effectue par un bouton poussoir où la position non enfoncée représente la positon repos, et où chaque enfoncement déclenche le verrouillage dudit dispositif de serrage (3) en cas de position déverrouillée, ou déclenche le déverrouillage en cas de position verrouillée.

16. Dispositif de serrage selon l'une quelconque des revendications 1 à 13, **caractérisé en ce que** la commande à distance du convertisseur électromécanique d'énergie (80) s'effectue par la clé de contact du véhicule automobile.

17. Dispositif de serrage selon l'une quelconque des revendications précédentes, **caractérisé en ce que** le système d'information sur l'état de verrouillage ou de déverrouillage dudit dispositif de serrage (3) consiste en un système visuel par signal lumineux.

18. Dispositif de serrage selon l'une quelconque des revendications 1 et 16, **caractérisé en ce que** le système d'informations sur l'état de verrouillage ou de déverrouillage dudit dispositif de serrage (3) consiste en un système visuel par message écrit sur un écran.

19. Dispositif de serrage selon les revendications 6, 11 et 12, **caractérisé en ce que** :
- le réducteur de serrage (60) est un réducteur mécanique à roue et vis sans fin monté dans un carter monobloc (63) comprenant :
. un boîtier (64) dans lequel est logée la roue (61) qui tourne librement sur un tourillon (66) de ce boîtier (64) muni d'un trou de passage (67) de la tige de serrage (21) ; et
. un boîtier (65) dans lequel est logée la vis (62), qui tourne librement dans ce boîtier (65) ;
- l'ensemble de blocage à cames (5) a :
. la came mobile (23) qui est entraînée en rotation par la roue (61) au moyen d'un tenon diamétral (42) agencé sur la face interne (27) de la came mobile, ledit tenon diamétral (42) s'engageant dans une rainure diamétrale (99) agencée sur la face externe (98) de la roue (61) ; ladite came mobile (23) ayant un trou de passage (29) de la tige de serrage (21) ;
. la came fixe (22) qui est liée en rotation avec une embase (54) au moyen de plots (41), agencés à la périphérie de la face externe (24) et ladite came fixe (22), lesdits plots (41) s'engageant dans des encoches (59) aménagées sur la face interne (55) de ladite embase (54), ladite came fixe (22) ayant un trou de passage (28) de la tige de serrage (21),
. l'embase (54) est munie à sa périphérie d'une tige axiale de liaison (58) ayant la longueur voulue pour s'engager entre deux ailettes (72) aménagées sur la face extérieure (71) du boîtier (64) de la roue (61) du réducteur de serrage (60), de manière à relier l'embase (54) avec le boîtier (64) qui est fixe en rotation et lié en rotation avec l'élément support (2), ladite embase (54) ayant un trou de passage (57) de la tige de serrage (21).

20. Dispositif de serrage selon la revendication 19, **caractérisé en ce que** :
- l'élément d'appui (48) est constitué par une collerette agencée à l'extrémité de la tige de serrage (21), ladite collerette (48) s'appliquant contre la face externe (56) de l'embase (54) ; et
- l'élément d'appui (49) est constitué par une rondelle tenue et réglée par un écrou (53) vissé sur l'extrémité filetée (47) de la tige de serrage (21) ;
- ledit élément d'appui (49) comportant une languette (50) de guidage dans une fente (19) du montant (13), et le boîtier (64) de la roue (61) du réducteur de serrage (60) étant muni, sur sa face interne (69), d'une languette (30) de guidage dans une fente (20) du montant (14).

21. Dispositif de serrage selon les revendications 6, 11 et 12, **caractérisé en ce que** :
- le réducteur de serrage (60) est un réducteur mécanique à roue et vis sans fin monté dans un carter monobloc (63) comprenant :
. un boîtier (64) dans lequel est logée la roue (61) qui tourne librement sur un tourillon (66) de ce boîtier (64) muni d'un trou de passage (67) de la tige de serrage (121) ; et
. un boîtier (65) dans lequel est logée la vis (62), qui tourne librement dans ce boîtier (65) ;
- l'écrou (148) est entraîné en rotation par la roue (61) au moyen d'un tenon diamétral (142) agencé sur la face interne d'appui (152) de l'écrou (148), ledit tenon diamétral (142) s'engageant dans une rainure diamétrale (99) agencée sur la face externe (98) de la roue (61).

22. Dispositif de serrage selon la revendication 21, **caractérisé en ce que** :
- l'élément d'appui (148) est constitué par l'écrou monté et vissé sur l'extrémité filetée (147) de la tige de serrage (21), ledit écrou s'appliquant contre la face externe (98) de la roue (61) ;
- l'élément d'appui (149) est constitué par une collerette agencée à l'extrémité de la tige de serrage (121), ladite collerette (149) s'appliquant contre la face externe (17) du montant (13) ;
- ledit élément d'appui (149) comporte une languette (150) de guidage dans une fente (19) du montant (13), et le boîtier (64) de la roue (61) du réducteur de serrage (60) étant muni sur sa face interne (69), d'une languette (30) de guidage dans une fente (20) du montant (14).

23. Dispositif de serrage selon l'une quelconque des revendications 19 à 22, **caractérisé en ce que** le système mécanique de transmission de mouvement est un câble flexible (90) disposé dans une gaine (91) qui est supportée à l'une de ses extrémités par le réducteur du convertisseur (81), et qui est supporté à l'autre extrémité par le carter (63) du réducteur de serrage (60).

24. Dispositif de serrage selon l'une quelconque des revendications 19 à 22, **caractérisé en ce que** le réducteur de serrage (60), le réducteur du convertisseur (81) et le convertisseur électromécanique d'énergie (80) forment une seule unité, un embout (83) du réducteur du convertisseur (81) se montant directement dans un logement (79) du carter (63) du réducteur de serrage (60).

25. Dispositif de serrage selon l'une quelconque des revendications précédentes, **caractérisé en ce qu'**il s'applique à une colonne de direction de véhicule automobile dans laquelle l'élément (1) est le tube corps (7) avec son carré renfort (8), et l'élément support (2) est monté sur la carrosserie du véhicule.

## Patentansprüche

1. Spannvorrichtung (3) eines Systems zur Einstellung der Stellung eines Teils (1) relativ zu einem als fest betrachteten Tragteil (2),
- wobei das Tragteil (2) aus einer Fußplatte (12) besteht, die an jedem ihrer beiden Enden eine Stütze (13, 14) aufweist, wobei das Teil (1) innerhalb der beiden Stützen (13, 14) des Tragteils (2) angeordnet ist, wobei die genannten Stützen (13, 14) zur Achse (11) des Teils (1) im wesentlichen parallel sind;
- das genannte System zur Einstellung der Stellung wird in der gewählten Stellung durch die genannte Spannvorrichtung (3) festgespannt, deren verschiedene Teile auf einer Spannstange (21, 121) angebracht sind, die die beiden Stützen (13) und (14) durchquert und deren Achse die Spannachse (6) ist, die auf der Achse (11) des Teils (1) im wesentlichen senkrecht steht;
- die genannte Spannvorrichtung (3) wird durch die elektrische Fernbedienung eines elektromechanischen Energiewandlers (80), der die Spannvorrichtung (3) in Drehung setzt und mit einem System zur Information über den Sperr- oder Freigabezustand ausgestattet ist, in die Sperr- oder Freigabestellung gebracht, **dadurch gekennzeichnet, dass**:
- der elektromechanische Energiewandler (80) einer Untersetzungsanordnung (60, 81) die gewünschte Drehbewegung liefert;
- die genannte Untersetzungsanordnung (60, 81) die Spannvorrichtung (3) in Drehung setzt;
- die Spannvorrichtung (3) weist eine Sperranordnung (5, 147-148) auf, die relativ zur Achse (11) außerhalb einer der Stützen (14) zwischen einer Außenseite (18) der Stütze (14) und einem Abstützteil (48, 148) angeordnet ist, das im wesentlichen senkrecht zur Spannstange (21, 121) mit dieser verbunden ist, wobei die genannte Untersetzungsanordnung (60, 81) die genannte Sperranordnung (5, 147-148) in Drehung setzt,
- die genannte Spannvorrichtung (3) weist außerhalb der anderen Stütze (13) und an einer Außenseite (17) dieser Stütze (13) ein Abstützteil (49, 149) auf, das im wesentlichen senkrecht zur Spannstange (21, 121) mit dieser verbunden ist.

2. Spannvorrichtung nach Patentanspruch 1, **dadurch gekennzeichnet, dass** die Sperranordnung eine Nockensperranordnung (5) ist, die umfasst:
- eine feste kreisförmige Nockenscheibe (22), die mit der Stütze (14) des Tragteils (2) zu gemeinsamer Drehung fest verbunden ist,
- eine bewegliche kreisförmige Nockenscheibe (23), die auf der Spannstange (21) frei drehbar ist;
- wobei die genannten Nockenscheiben die Spannachse (6) zur Achse haben und von der Spannstange (21) frei durchquert werden.

3. Spannvorrichtung nach Patentanspruch 2, **dadurch gekennzeichnet, dass** die Nockensperranordnung (5) umfasst:
- die feste Nockenscheibe (22), die Zähne (32) hat, die jeweils aus einer Spitze (34) und einem Einschnitt (36) bestehen, mit zwei Flanken (38, 40), wobei jede der Flanken (38, 40) eine derart festgelegte Steigung aufweist, dass eine allmähliche Anspannung der Spannvorrichtung (3) sichergestellt ist;
- die bewegliche Nockenscheibe (23), die dieselbe Anzahl Zähne (31) trägt, wie die feste Nockenscheibe (22), wobei jeder der Zähne (31) der genannten beweglichen Nockenscheibe (23) aus einer Spitze (33) und einem Einschnitt (35) mit zwei Flanken (37, 39) besteht, wobei jede der beiden Flanken (37, 39) derart ausgebildet ist, dass sie mit der entsprechenden Flanke (38, 40) der festen Nockenscheibe (22) derart zusammenarbeitet, dass die Freigabestellung sichergestellt ist, und dass sie mit der entsprechenden Flanke (38, 40) der festen Nockenscheibe (22) derart zusammenarbeitet, dass die allmähliche Anspannung der Spannvorrichtung (3) sichergestellt wird;
- wobei die Breite der Spitze (33) des Zahns (31) der beweglichen Nockenscheibe (23) mit der Breite des entsprechenden Einschnitts (36) der festen Nockenscheibe (22) zusammenarbeitet, um das Einrücken in die Freigabestellung zu ermöglichen;
- wobei die entsprechenden Spitzen 34 und 33 zur Aufrechterhaltung der Sperrstellung zusammenarbeiten.

4. Spannvorrichtung nach Patentanspruch 1, **dadurch gekennzeichnet, dass** die Spannvorrichtung (3) besteht
- aus der Spannstange (121), die durch das Abstützteil (149) an Drehung um die Spannachse (6) gehindert wird;
- wobei die genannte Spannstange (121) an ihrem anderen Ende einen gewindeten Teil (147) aufweist, der mit einer Mutter (148) zusammenarbeitet, die außerhalb der anderen Stütze (14) angeordnet ist; und die die Sperranordnung bildet.

5. Spannvorrichtung nach irgendeinem der vorangehenden Patentansprüche, **dadurch gekennzeichnet, dass** die Untersetzungsanordnung ein einziges Drehzahlmindergetriebe, das Spannmindergetriebe (60) genannt wird, umfasst, das die Sperranordnung (3) in Drehung setzt, wobei das genannte Spannmindergetriebe (60) auf der Spannstange (21, 121) frei drehbar angebracht ist.

6. Spannvorrichtung nach einem der Patentansprüche 1 bis 4, **dadurch gekennzeichnet, dass** die Untersetzungsanordnung zwei Drehzahlmindergetriebe aufweist:
- ein Drehzahlmindergetriebe, das Spannmindergetriebe (60) genannt wird, das die Sperranordnung (3) in Drehung setzt, wobei das genannte Spannmindergetriebe (60) auf der Spannstange (21, 121) frei drehbar angebracht ist;
- ein Drehzahlmindergetriebe, das Wandlermindergetriebe (81) genannt wird, das direkt durch den elektromechanischen Energiewandler (80) angetrieben wird.

7. Spannvorrichtung nach Patentanspruch 5, **dadurch gekennzeichnet, dass** das Spannmindergetriebe (60) und der elektromechanische Energiewandler (80) eine einzige Einheit bilden, die derart angebracht ist, dass das Spannmindergetriebe (60) auf der Spannstange (21, 121) frei drehbar ist.

8. Spannvorrichtung nach Patentanspruch 5, **dadurch gekennzeichnet, dass** das Spannmindergetriebe (60) und der elektromechanische Energiewandler (80) durch ein mechanisches System zur Bewegungsübertragung zu gemeinsamer Drehung verbunden sind, so dass der elektromechanische Energiewandler (80) an der gewünschten Stelle angeordnet werden kann, und dass das Spannmindergetriebe (60) auf der Spannstange (21, 121) frei drehbar ist.

9. Spannvorrichtung nach Patentanspruch 8, **dadurch gekennzeichnet, dass** es sich bei dem mechanischen System zur Bewegungsübertragung um eine biegsame Welle (90) handelt, die in einer Hülle (91) angeordnet ist, die an einem ihrer Enden vom elektromechanischen Energiewandler (80) getragen wird und an ihrem anderen Ende vom Gehäuse (63) des Spannmindergetriebes (60).

10. Spannvorrichtung nach Patentanspruch 6, **dadurch gekennzeichnet, dass** das Spannmindergetriebe (60), das Wandlermindergetriebe (81) und der elektromechanische Energiewandler (80) eine einzige Anordnung bilden, die derart montiert ist, dass das Spannmindergetriebe (60) auf der Spannstange (21, 121) frei drehbar ist.

11. Spannvorrichtung nach Patentanspruch 6, **dadurch gekennzeichnet, dass** das Spannmindergetriebe (60) einerseits und das Wandlermindergetriebe (81) mit dem elektromechanischen Energiewandler (80) andererseits durch ein mechanisches System zur Bewegungsübertragung zu gemeinsamer Drehung verbunden sind, so dass der elektromechanische Energiewandler (80) mit dem Wandlermindergetriebe (81) an der gewünschten Stelle angeordnet werden können und dass das Spannmindergetriebe (60) auf der Spannstange (21, 121) frei drehbar ist.

12. Spannvorrichtung nach irgendeinem der vorangehenden Patentansprüche, **dadurch gekennzeichnet, dass** der elektromechanische Energiewandler (80) ein Elektromotor ist.

13. Spannvorrichtung nach irgendeinem der Patentansprüche 1 bis 11, **dadurch gekennzeichnet, dass** der elektromechanische Energiewandler (80) ein elektromagnetisches System ist.

14. Spannvorrichtung nach irgendeinem der vorangehenden Patentansprüche, **dadurch gekennzeichnet, dass** die Fernbedienung des elektromechanischen Energiewandlers (80) durch einen elektrischen Schalter mit zwei Stellungen (Ruhe und aktiv) erfolgt, der die Sperrung der genannten Spannvorrichtung (3) im Fall der Freigabestellung bewirkt oder der die Freigabe im Fall der Sperrstellung bewirkt.

15. Spannvorrichtung nach irgendeinem der Patentansprüche 1 bis 13, **dadurch gekennzeichnet, dass** die Fernbedienung des elektromechanischen Energiewandlers (80) durch einen Druckknopf erfolgt, bei dem die nicht gedrückte Stellung die Ruhestellung darstellt und jeder Druck im Fall der Freigabestellung die Sperrung der genannten Spannvorrichtung (3) bewirkt, und im Fall der Sperrstellung die Freigabe bewirkt.

16. Spannvorrichtung nach irgendeinem der Patentansprüche 1 bis 13, **dadurch gekennzeichnet, dass** die Fernbedienung des elektromechanischen Energiewandlers (80) durch den Zündschlüssel des Kraftfahrzeugs erfolgt.

17. Spannvorrichtung nach irgendeinem der vorangehenden Patentansprüche, **dadurch gekennzeichnet, dass** das Informationssystem über den Freigabe- oder Sperrzustand der genannten Spannvorrichtung (3) aus einem visuellen System mit Leuchtsignal besteht.

18. Spannvorrichtung nach irgendeinem der Patentansprüche 1 und 16, **dadurch gekennzeichnet, dass** das Informationssystem über den Freigabe- oder Sperrzustand der genannten Spannvorrichtung (3) aus einem visuellen System mit auf einen Bildschirm geschriebener Meldung besteht.

19. Spannvorrichtung nach den Patentansprüchen 6, 11 und 12, **dadurch gekennzeichnet, dass**
- das Spannmindergetriebe (60) ein mechanisches Mindergetriebe mit Rad und Schnecke ist, eingebaut in ein Blockgehäuse (63), bestehend aus:
- einem Gehäuse (64), in dem das Rad (61) angeordnet ist, das auf einem Drehzapfen (66) dieses Gehäuses (64) frei drehbar ist, der mit einem Loch (67) für den Durchtritt der Spannstange (21) versehen ist, und
- einem Gehäuse (65), in dem die Schnecke (62) angeordnet ist, die in diesem Gehäuse (65) frei drehbar ist;
- die Nockensperranordnung (5) besteht aus:
- der beweglichen Nockenscheibe (23), die durch das Rad (61) über einen diametralen Mitnehmer (42) in Drehung gesetzt wird, der an der Innenseite (27) der beweglichen Nockenscheibe ausgebildet ist und der in eine diametrale Rille (99) eingreift, die auf der Außenseite (98) des Rades (61) ausgebildet ist, wobei die genannte bewegliche Nockenscheibe (23) über ein Loch (29) für den Durchtritt der Spannstange (21) verfügt,
- der festen Nockenscheibe (22), die durch Stifte (41) mit einer Sitzplatte (54) gegen Drehung verbunden ist, die auf dem Umfang der Außenseite (24) der genannten festen Nockenscheibe (22) ausgebildet sind, wobei diese Stifte (41) in Vertiefungen (59) eingreifen, die an der Innenseite (55) der genannten Sitzplatte (54) ausgebildet sind, wobei diese feste Nockenscheibe (22) ein Loch (28) für den Durchtritt der Spannstange (21) aufweist;
- die Sitzplatte (54) ist an ihrem Umfang mit einem Verbindungsstab (58) in Achsenrichtung versehen, der über die gewünschte Länge verfügt, um zwischen zwei Rippen (72) einzugreifen, die auf der Außenseite (71) des Gehäuses (64) des Rades (61) des Spannmindergetriebes (60) ausgebildet sind, derart, dass die Sitzplatte (54) mit dem Gehäuse (64) verbunden wird, das drehfest ist und zu gemeinsamer Drehung mit dem Tragteil (2) verbunden ist, wobei die genannte Sitzplatte (54) ein Loch (57) für den Durchtritt der Spannstange (21) aufweist.

20. Spannvorrichtung nach Patentanspruch 19, **dadurch gekennzeichnet, dass**
- das Abstützteil (48) aus einem Kragen besteht, der am Ende der Spannstange (21) ausgebildet ist und der sich an die Außenseite (56) der Sitzplatte (54) anlegt, und
- das Abstützteil (49) aus einer Scheibe besteht, die von einer Mutter (53) gehalten und eingestellt wird, die auf das gewindete Ende (47) der Spannstange (21) geschraubt wird,
- wobei das genannte Abstützteil (49) eine Zunge (50) zur Führung in einem Schlitz (19) der Stütze (13) trägt und das Gehäuse (64) des Rades (61) des Spannmindergetriebes (60) auf der Innenseite (69) mit einer Zunge (30) zur Führung in einem Schlitz (20) der Stütze (14) versehen ist.

21. Spannvorrichtung nach den Patentansprüchen 6, 11 und 12, **dadurch gekennzeichnet, dass**
- das Spannmindergetriebe (60) ein mechanisches Mindergetriebe mit Rad und Schnecke ist, das in einem Blockgehäuse (63) montiert ist, bestehend aus:
- einem Gehäuse (64), in dem das Rad (61) angeordnet ist, das auf einem Drehzapfen (66) dieses Gehäuses (64) frei drehbar ist, der mit einem Loch (67) für den Durchtritt der Spannstange (121) versehen ist, und
- einem Gehäuse (65), in dem die Schnecke (62) angeordnet ist, die in diesem Gehäuse (65) frei drehbar ist;
- die Mutter (148) wird über einen diametralen Mitnehmer (142) durch das Rad (61) in Drehung gesetzt, der auf der inneren Andruckseite (152) der Mutter (148) ausgebildet ist, wobei dieser diametrale Mitnehmer (142) in eine diametrale Rille (99) eingreift, die an der Außenseite (98) des Rades (61) ausgebildet ist.

22. Spannvorrichtung nach Patentanspruch 21, **dadurch gekennzeichnet, dass**
- das Abstützteil (148) aus der Mutter besteht, die auf das gewindete Ende (147) der Spannstange (21) gesetzt und geschraubt ist, wobei diese Mutter an der Außenseite (98) des Rades (61) anliegt;
- das Abstützteil (149) besteht aus einem Kragen (149), der am Ende der Spannstange (121) ausgebildet ist und der sich an die Außenseite (17) der Stütze (13) anlegt;
- das genannte Abstützteil (149) weist eine Zunge (150) zur Führung in einem Schlitz (19) der Stütze (13) auf und das Gehäuse (64) des Rades (61) des Spannmindergetriebes (60) ist auf der Innenseite (69) mit einer Zunge (30) zur Führung in einem Schlitz (20) der Stütze (14) versehen.

23. Spannvorrichtung nach irgendeinem der Patentansprüche 19 bis 22, **dadurch gekennzeichnet, dass** das mechanische System zur Bewegungsübertragung eine biegsame Welle (90) ist, die in einer Hülle (91) angeordnet ist, die an einem ihrer Enden vom Wandlermindergetriebe (81) getragen wird und am anderen Ende vom Gehäuse (63) des Spannmindergetriebes (60).

24. Spannvorrichtung nach irgendeinem der Patentansprüche 19 bis 22, **dadurch gekennzeichnet, dass** das Spannmindergetriebe (60), das Wandlermindergetriebe (81) und der elektromechanische Energiewandler (80) eine einzige Einheit bilden, wobei ein Ansatzstück (83) des Wandfermindergetriebes (81) direkt in eine Aufnahme (79) des Gehäuses (63) des Spannmindergetriebes (60) gesetzt wird.

25. Spannvorrichtung nach irgendeinem der vorangehenden Patentansprüche, **dadurch gekennzeichnet, dass** sie auf eine Kraftfahrzeug-Lenksäute angewandt wird, bei der das Teil (1) der Rohrkörper (7) mit seinem Verstärkungsvierkant (8) ist und das Tragteil (2) an der Karosserie des Fahrzeugs angebracht ist.

## Claims

1. A clamping device (3) of a system for adjusting the position of a member (1) relative to a support member (2) regarded as fixed:
- the support member (2) being constituted by a base (12) having an upright (13, 14) at each of its two ends, the member (1) being inside the two uprights (13, 14) of the support member (2), said uprights (13, 14) being substantially parallel to the axis (11) of the member (1),
- said position adjustment system is locked in the chosen position by said clamping device (3), whose component parts are mounted on a clamping rod (21, 121) passing through the two uprights (13) and (14), and whose axis is the clamping axis (6), which is substantially perpendicular to the axis (11) of the member (1),
- said clamping device (3) is locked or unlocked by an remotely electrically controlling of a electromechanical energy converter (80) which drives rotation of the clamping device (3), with a system providing information as to the locked or unlocked state ; **characterized in that**:
- the electromechanical energy converter (80) imparts the required rotary movement to the speed reducer system (60, 81) comprising at least a clamping reducer (60) ;
- said clamping reducer (60) drives in rotation the clamping device (3) ;
- the clamping device (3) includes a immobilizing system (5, 147-148) outside one of the uprights (14) relative to the axis (11), between an outside face (18) of the upright (14) and a bearing member (48, 148) joined and substantially perpendicular to the clamping rod (21, 121) ;
- said clamping device (3) includes outside the other upright (13) and against an outside face (17) of said upright (13), a bearing member (49, 149) joined and substantially perpendicular to the clamping rod (21, 121) ;
- the clamping reducer (60) is disposed in a casing (63) mounted against the outside face (18) of the upright (14) and between said upright (14) and the immobilizing system (5, 147-148) ;
- the clamping reducer (60) drives rotation of said immobilizing system (5, 147-148) ;
- the clamping rod (21, 121) is prevented from rotating ;
- the clamping reducer (21, 121) is free to rotate on said clamping rod (21, 121).

2. A clamping device according to claim 1, **characterized in that** the cam type immobilizing system (5) includes:
- a circular fixed cam (22) prevented from rotating with respect to the upright (14) of the support member (2);
- a circular mobile cam (23) free to rotate on the clamping rod (21);
- said cams having the clamping axis (6) as their axis and having the clamping rod (21) pass freely through them.

3. A clamping device according to claim 2, **characterized in that** the cam type immobilizing system (5) includes:
- the fixed cam (22), which has teeth (32) each comprising a summit (34) and a hollow (36), with two flanks (38, 40), each of the flanks (38, 40) having a slope adapted to load the clamping device (3) progressively;
- the mobile cam (23), which has the same number of teeth (31) as the fixed cam (22), each of the teeth (31) of said mobile cam (23) has a summit (33) and a hollow (35) with two flanks (37, 39), each of the two flanks (37, 39) is adapted to cooperate with the corresponding flank (38, 40) of the fixed cam (22) to assure the unlocked position, and to cooperate with the corresponding flank (38, 40) of the fixed cam (22) to load the clamping device (3) progressively;
- the width of the summit (33) of the tooth (31) of the mobile cam (23) cooperating with the width of the corresponding hollow (36) of the fixed cam (22) to procure the unlocked position;
- the corresponding summits (34 and 33) cooperating to maintain the locked position.

4. A clamping device according to the claim 1, **characterized in that** the clamping device (3) is constituted:
- by the clamping rod (121) which is prevented from rotating about the clamping axis (6) by the bearing member (149);
- said clamping rod (121) has at its other end a screwthreaded part (147), which cooperates with a nut (148) arranged outside the other upright (14) ; and constitute the immobilizing system.

5. A clamping device according to any one of the preceding claims, **characterized in that** the speed reducer system includes a single speed reducer referred to as the clamping reducer (60), which drives rotation of the clamping device (3), said clamping reducer (60) is mounted to rotate freely on the clamping rod (21, 121).

6. A clamping device according to any one of claims 1 to 4, **characterized in that** the speed reducer system includes two speed reducers:
- a speed reducer referred to as the clamping reducer (60), which drives rotation of the clamping device (3), said clamping reducer (60) is mounted to rotate freely on the clamping rod (21, 121) ;
- a speed reducer referred to as the converter reducer (81), which is driven directly by the electromechanical energy converter (80).

7. A clamping device according to claim 5, **characterized in that** the clamping reducer (60) and the electromechanical energy converter (80) form a single system, which is mounted so that the clamping reducer (60) is free to rotate on the clamping rod (21, 121).

8. A clamping device according to claim 5, **characterized in that** the clamping reducer (60) and the electromechanical energy converter (80) are rotationally linked by a mechanical motion transmission system, so that the electromechanical energy converter (80) can be placed at the required location, and the clamping reducer (60) is free to rotate on the clamping rod (21, 121).

9. A clamping device according to claim 8,
**characterized in that** the mechanical motion transmission system is a flexible cable (90) in a sheath (91), which is supported at one of his ends by the electromechanical energy converter (80), and which is supported at the other end by the casing (63) of the clamping reducer (60).

10. A clamping device according to claim 6, **characterized in that** clamping reducer (60), the converter reducer (81), and the electromechanical energy converter (80) form a single system, which is mounted so that the clamping reducer (60) is free to rotate on the clamping rod (21, 121).

11. A clamping device according to claim 6, **characterized in that** the clamping reducer (60), on the one hand, and the converter reducer (81) with the electromechanical energy converter (80), on the other hand, are rotationally coupled by a mechanical motion transmission system so that the electromechanical energy converter (80), with the converter reducer (81), can be placed at the required location, and the clamping reducer (60) is free to rotate on the clamping rod (21, 121).

12. A clamping device according to any one of preceding claims, **characterized in that** the electromechanical energy converter (80) is an electric motor.

13. A clamping device according to any one of claims 1 to 11, **characterized in that** the electromechanical energy converter (80) is an electromagnetic system.

14. A clamping device according to any one of preceding claims, **characterized in that** the remotely controlling of the electromechanical energy converter (80) is made by a two-position electrical switch : rest, and active which locks said clamping device (3) when it is in the unlocked position or which unlocks it when it is in the locked position.

15. A clamping device according to any one of claims 1 to 13, **characterized in that** the remotely electrically controlling of the electromechanical energy converter (80) is made by a pushbutton whose non-depressed position is its rest position, and each depression of which locks said clamping device (3) when it is in the unlocked position or unlocks it when it is in the locked position.

16. A clamping device according to any one of claims 1 to 13, **characterized in that** the remotely controlling of the electromechanical energy converter (80) is made by the ignition key of the automobile vehicle.

17. A clamping device according to any one of the preceding claims, **characterized in that** the system providing information on the locked or unlocked state of said clamping device (3) is a visual system employing a luminous signal.

18. A clamping device according to any one of claims 1 and 16 , **characterized in that** the system providing information on the locked or unlocked state of said clamping device (3) is a visual system employing a written message on a screen.

19. A clamping device according to claims 6, 11 and 12, **characterized in that**:
- the clamping reducer (60) is a mechanical worm wheel and worm screw reducer mounted in a one-piece casing (63) comprising:
. a casing unit (64) accommodating the worm wheel (61) which turns freely on a journal (66) of this casing unit (64) provided with a hole (67) through which the clamping rod (21) passes; and
. a casing unit (65) accommodating the screw (62), which turns freely in this casing unit (65);
- the cam type immobilizing system (5) has:
. the mobile cam (23) which is driven in rotation by the worm wheel (61) by means of a diametral tenon (42) on the inside face (27) of the mobile cam, said diametral tenon (42) engaging in a diametral groove (99) on the outside face (98) of the worm wheel (61) ; said mobile cam (23) having a hole (29) in it through which the clamping rod (21) passes;
. the fixed cam (22) which is prevented in rotation with a base (54) by means of studs (41) arranged on the periphery of the outside face (24) and said fixed cam (22), said studs (41) engaging in notches (59) on the inside face (55) of said base (54), said fixed cam (22) having a hole (28) in which through the clamping rod (21) passes,
. the base (54) is provided at its periphery with an axial connecting rod (58) having the required length to engage between two fins (72) on the outside face (71) of the casing unit (64) of the worm wheel (61) of the clamping reducer (60), to connect the base (54) to the casing unit (64) which is unable to rotate with respect to the support member (2), said base (54) having a hole (57) in it through which the clamping rod (21) passes.

20. A clamping device according to claim 19, **characterized in that** :
- the bearing member (48) is a flange at the end of the clamping rod (21), said flange (48) pressing against the outside face (56) of the base (54) ; and
- the bearing member (49) is a washer held and adjusted by a nut (53) screwed onto the screwthreaded end (47) of the clamping rod (21);
- said bearing member (49) including a guide tongue (50) in a slot (19) of the upright (13), and the casing unit (64) of the worm wheel (61) of the clamping reducer (60) being provided, on its inside face (69) with a guide tongue (30) in a slot (20) in the upright (14).

21. A clamping device according to claims 6, 11 and 12, **characterized in that**:
- the clamping reducer (60) is a mechanical worm wheel and worm screw reducer mounted in a one-piece casing (63) comprising:
. a casing unit (64) accommodating the worm wheel (61) which turns freely on a journal (66) of this casing unit (64) which has a hole (67) in it through which the clamping rod (121) passes; and
. a casing unit (65) accommodating the screw (62), which turns freely in this casing unit (65);
- the nut (148) is driven in rotation by the worm wheel (61) by means of a diametral tenon (142) on the inside bearing face (152) of the nut (148), said diametral tenon (142) engaging in a diametral groove (99) on the outside face (98) of the worm wheel (61).

22. A clamping device according to claim 21, **characterized in that**:
- the bearing member (148) is the nut mounted and screwed onto the screwthreaded end (147) of the clamping rod (21), said nut pressing against the outside face (98) of the worm wheel (61) ;
- the bearing member (149) is a flange at the end of the clamping rod (121), said flange (149) pressing against the outside face (17) of the upright (13) ;
- said bearing member (149) includes a guide tongue (150) in a slot (19) of the upright (13), and the casing unit (64) of the worm wheel (61) of the clamping reducer (60) being provided on its inside face (69), with a guide tongue (30) in a slot (20) in the upright (14).

23. A clamping device according to any one of claims 19 to 22, **characterized in that** the mechanical motion transmission system is a flexible cable (90) in a sheath (91) which is supported at one of its ends by the converter reducer (81), and which is supported at the other end by the casing (63) of the clamping reducer (60).

24. A clamping device according to any one of claims 19 to 22, **characterized in that** the clamping reducer (60), the converter reducer (81) and the electromechanical energy converter (80) form a single unit, an end-piece (83) of the converter reducer (81) is mounted directly in a housing (79) of the casing (63) of the clamping reducer (60).

25. A clamping device according to any one of preceding claims, **characterized in that** it is applied to an automobile vehicle steering column in which the member (1) is the body tube (7) with its reinforcing bracket (8), and the support member (2) is mounted on the bodyshell of the vehicle.
